Europäisches Patentamt

European Patent Office

Office européen des brevets

(11) Publication number: **0 228 055 B1**

# EUROPEAN PATENT SPECIFICATION

(45) Date of publication of patent specification: **04.03.92**  (51) Int. Cl.⁵: **G11B 7/08, H02K 41/035**

(21) Application number: **86117800.2**

(22) Date of filing: **19.12.86**

(54) **Driving equipment for objective lens.**

(30) Priority: **27.12.85 JP 296376/85**
**27.12.85 JP 296377/85**
**27.12.85 JP 296378/85**
**27.12.85 JP 296382/85**
**27.12.85 JP 296383/85**
**20.03.86 JP 62655/86**

(43) Date of publication of application:
**08.07.87 Bulletin 87/28**

(45) Publication of the grant of the patent:
**04.03.92 Bulletin 92/10**

(84) Designated Contracting States:
**DE FR GB**

(56) References cited:
**EP-A- 0 068 757**
**EP-A- 0 097 402**
**EP-A- 0 176 332**
**DE-B- 1 119 992**

**PATENT ABSTRACTS OF JAPAN, vol. 9, no. 157 (P-369)[1880], 2nd July 1985; & JP-A-60 32 139 (SHARP K.K.) 19-02-1985**

(73) Proprietor: **MITSUBISHI DENKI KABUSHIKI KAISHA**
**2-3, Marunouchi 2-chome Chiyoda-ku**
**Tokyo 100(JP)**

(72) Inventor: **Kenjiro, Kime Mitsubishi Denki K.K.**
**Denshishouhinkaihatsukenkyujo Babazusho 1**
**Nagaokakyo-shi Kyoto-fu(JP)**
Inventor: **Shigekazu, Sakabe Mitsubishi Denki K.K.**
**Chuokenkyujo 8-1-1 Tsukaguchihonmachi Amagasaki-shi Hyougo-ken(JP)**
Inventor: **Hashimoto, Akira Mitsubishi Denki K.K.**
**Denshishouhinkaihatsukenkyujo Babazusho 1**
**Nagaokakyo-shi Kyoto-fu(JP)**
Inventor: **Matozaki, Toshiva Mitsubishi Denki K.K.**
**Gunmaseisaku 800 Ojima-machi**
**Nitta-gun Gunma-ken(JP)**

(74) Representative: **Goddar, Heinz J., Dr. et al**
**FORRESTER & BOEHMERT Widenmayer-strasse 4/I**
**W-8000 München 22(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

# Description

The present invention relates to a driving equipment for objective lens and more particularly to such a driving equipment that controls both out of track and out of focus of light spots condensed on a disc, according to the preamble of claim 1 (JP-A-6 032 139).

BACKGROUND OF THE INVENTION

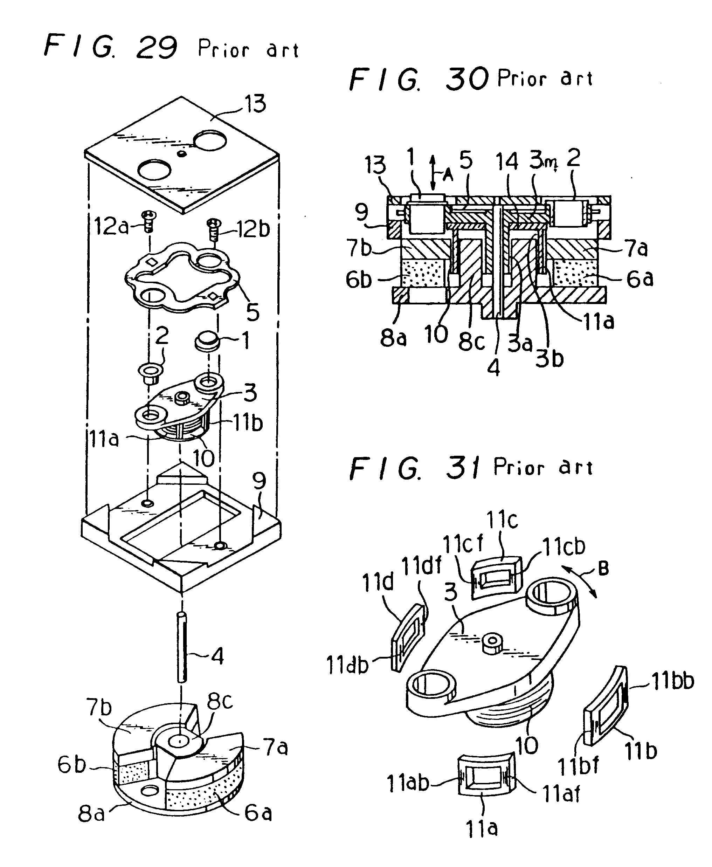

A conventional equipment for objective lens is shown in Fig. 29 to Fig. 31, wherein numeral (1) indicates an objective lens and numeral (2) indicates a counter weight, while numeral (3) indicates a lens holder having on its lower face a tubular bearing (3a) and a coil holder (3m) to be formed into an elliptic shape, with the objective lens (1) and the counter weight (2) being provided on both sides; numeral (4) indicates a supporting shaft with which the bearing (3a) of the lens holder (3) is engaged slidingly in the axial direction shown by an arrow A in Fig. 30 and rotatively in the direction shown by an arrow B in Fig. 31; numeral (5) indicates a supporting rubber holding the lens holder (3) so as to permit its motions in the directions shown by the above-mentioned arrows A and B; numerals (6a) and (6b) indicate permanent magnets, the upper faces and lower faces each of which are magnetized into different polarities; numerals (7a) and (7b) indicate yokes located on the permanent magnets (6a), (6b); numeral (8a) indicates a disk-like yoke as a holding base for both the supporting shaft (4) and the permanent magnets (6a), (6b), while numeral (8c) indicates a tubular central yoke; numeral (9) indicates a fixing base of the supporting rubber (5); numeral (10) indicates a focus controlling coil; numerals (11a), (11b), (11c), and (11d) indicate track controlling coils; numerals (12a), (12b) indicate set screws for fixing the supporting rubber (5) onto the holding base (9); and numeral (13) indicates a cover.

The bearing (3a) is positioned inside the central yoke (8c), while the coil support tube (3b) constructed in one piece with the coil holder (3m) is positioned outside the central yoke (8c). The focus controlling coil (10) is wound into a cylindrical shape around the outside periphery of the coil support tube (3b), and the track controlling coils (11a) to (11d) are fixed on the coil (10) to cover the outside surface thereof. The coils (11a) to (11d) are coiled so as to form rectangular shapes and have vertical coil sides (11ab) and (11af), (11bf) and (11bb), (11cb) and (11cf), and (11db) and (11df) respectively extending in parallel to the shaft (4). Each coil and each permanent magnet mentioned above construct a driving device for moving the holder.

Next, explanation is made on the action. By flowing a prescribed electric current on the focus controlling coil (10), the lens holder (3) slides in the direction of an arrow mark A to control a focus of objective lens (1). And also, by flowing a prescribed electric current on the track controlling coils (11a), (11b), (11c) and (11d), a force acts on one side of vertical coil sides (11af), (11bf), (11cf) and (11df) extending in parallel to the shaft (4), so that the lens holder (3) rotates in each direction of an arrow mark B to rotate the objective lens (1) in either direction circumferentially, whereby the track control is accomplished.

In the conventional driving equipment for objective lens, as described above, the focus controlling coil (10) and the track controlling coils (11a), (11b), (11c) and (11d) utilize one and the same magnetic circuit that is made up by the permanent magnets (6a), (6b) and the yokes (7a), (7b) and (8a), so that the magnetic fluxes, caused by the permanent magnets (6a), (6b), have one-direction polarities, e.g. only the polarity following the direction from yoke (7a) to yoke (8c), whereby, of vertical coil sides each of the track controlling coils (11a), (11b), (11c) and (11d), only the one side of vertical coil sides (11af), (11bf), (11cf) and (11d f) can be given a force in the direction of arrow mark B, so that only the corresponding vertical coil sides can be utilized effectively. In other words, it is impossible to utilize both sides of vertical coil sides in order to give a force to the lens holder (3) in the direction of arrow mark B, because to the track controlling coils (11a), (11b), (11c) and (11d), the magnetic fluxes act in the same direction on both sides of their vertical coil sides (11af) and (11ab), (11bf) and (11bb), (11cb) and (11cb), and (11df) and (11db). This makes the utilization efficiency unfavorable.

Accordingly, the unfavorable utilization efficiency made it necessary to increase coil volume and number of coil turnings in order to obtain the torque required. However, this caused a large volume of coil owing to the increase in terminal resistance, making it impossible to achieve the miniaturization of coil, and resulted in increasing the production cost.

From EP-A-0 068 757 there is known an objective lens assembly for optical disc players similar to that one described herein above. Thus, the same problems arise as mentioned before.

In EP-A-0 097 402 description is given of an optical device using multi-pole permanent magnets put together in a body.

JP-A-6 032 139 discloses an objective lens driver having multi-pole magnetisation with permanent magnets put together in a body.

In said driver efficency of track and focus control is poor, because there are large gaps between magnets on the one hand and focus and track controlling coils on the other hand.

Therefore, the object underlying the invention is to increase efficiency of both track and focus controlling coils.

The above object is aimed by a driving equipment according to claim 1.

Gaps between magnets on the one hand and focus and track controlling coils on the other hand are minimized, so that maximum control efficiency of both said coils is achieved.

Prefered embodiments of the invention are claimed in the subclaims.

BRIEF DESCRIPTION OF THE DRAWINGS

Fig. 1 is a partial plan view showing the relations among lens holder, coils and permanent magnets of a driving equipment for objective lens according to an embodiment of the present invention;

Fig. 2 is a sectional view taken on line I-I in Fig. 1;

Fig. 3 (a) is a partial view in perspective showing directions in which permanent magnets in use for controlling both track and focus are fixed;

Fig. 3 (b) is an exploded perspective view showing the driving equipment for objective lens on the whole;

Fig. 4 is a plan view showing directions of magnetic fluxes in Fig. 1;

Fig. 5 is a perspective view of principal part showing an embodiment of structure for fixing permanent magnets on yokes;

Fig. 6 is a partial view in perspective of the embodiment of permanent magnets fixed in the direction of their thicknesses;

Fig. 7 is a partial plan view showing the direction in which the permanent magnets in use for controlling both track and focus in Fig. 5 are fixed;

Fig. 8(a) and Fig. 8(b) are a perspective view of another embodiment of magnet section constructing the present invention and a diagramatic view illustrating a characteristic in the state of fixing the magnets;

Fig. 9 is a plan view showing the directions of magnetic fluxes caused by the magnet section shown in Fig. 8(a);

Fig. 10, Fig. 11(a) and Fig. 11(b) are a perspective view and a plan view of further embodiment of the magnet section as well as a diagramatic view illustrating a characteristic in the state of fixing the magnets in such an embodiment;

Fig. 12 to Fig. 15 are views showing respectively the state wherein a recess accommodating a track controlling coil is provided on a portion of magnet section in another embodiment of a driving equipment for objective lens according to the present invention;

Fig. 16 is a plan view showing one embodiment of magnet section;

Fig. 17 is a plan view showing the state wherein the magnet section is formed in a ring-like shape as one embodiment of the present invention;

Fig. 18 to Fig. 23 and Fig. 24 to Fig. 28 show other embodiments of driving equipment for objective lens according to the present invention; and

Fig. 29 to Fig. 31 are an exploded view in perspective, a sectional view and an exploded view in perspective of principal part showing an embodiment of the conventional driving equipment for objective lens.

DESCRIPTION OF THE PREFERRED EMBODIMENT

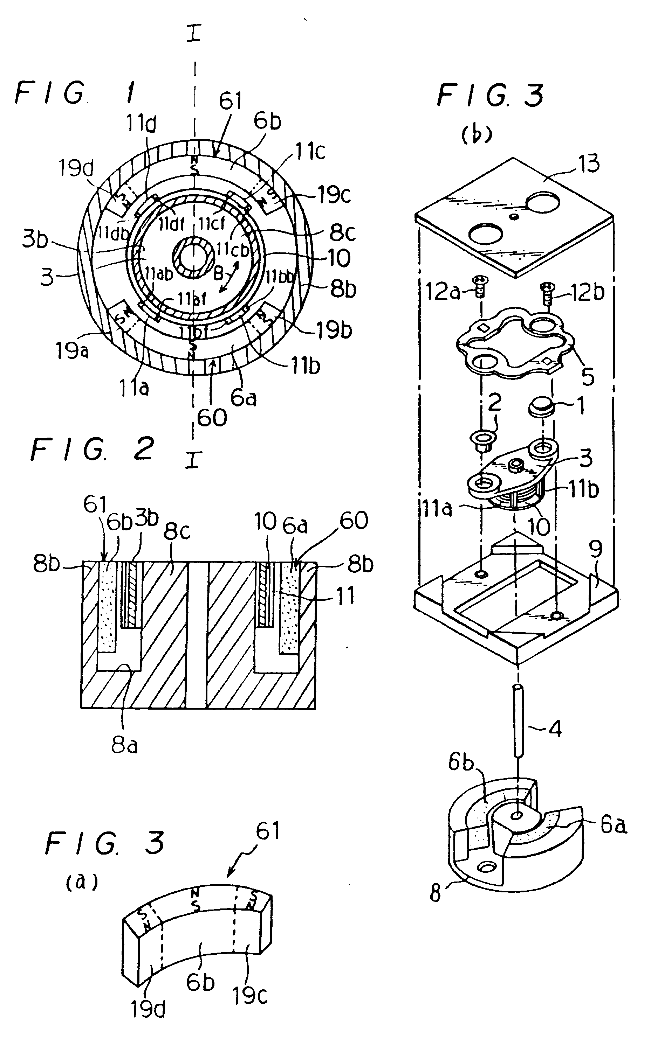

In Fig. 1 to Fig. 3, a focus controlling coil (10) is wound into a cylindrical shape around a coil supporting tubular body (3b) positioned on the lower part of a lens holder (3), and four track controlling coils (11a), (11b), (11c) and (11d) are fixed at equal spaces on the focus controlling coil (10). One or more projecting part for mounting said coils 11 are provided at the side of said lens holder 3. The coil (10) is wound around into a cylindrical shape centering around a shaft (4), and the track controlling coils (11a - 11d), which are wound around so as to form rectangular shapes, are secured on the surface of the coil (10). Magnet sections (60, 61) are arranged along the outside periphery of a disc-like yoke (8a). Each section of magnets (60, 61) consist, in one piece, of track controlling permanent magnets (19a), (19b), (19c) and (19d) as sub-permanent magnets and a permanent magnet (6a) in the capacity of a main permanent magnet in use for controlling both track and focus. The permanent magnets (19a), (19b) are positioned on both sides of the permanent magnet (6a), both ends of which are set to the length in such a way as to face each other vertical coil sides (11af), (11bf) which are in parallel to the shaft (4) of the coils (11a), (11b), so that the permanent magnets (19a), (19b) face each other vertical coil sides (11ab), (11bb) on the opposite side of the vertical coil sides (11af), (11bf). And, the permanent magnets (19d), (19c) are positioned on both sides of a permanent magnet (6b), both ends of which are set to the length in such a way as to face each other vertical coil sides (11cf), (11df) which are in parallel to the shaft (4) of the coils (11c), (11d), so that the permanent magnets (19d), (19c) face each other vertical coil sides (11cb), (11db) on the opposite side of the vertical coil sides (11cf), (11df).

The permanent magnets (6a), (6b) in use for controlling both track and focus and the track controlling permanent magnets (19a - 19d) consist of, for example, plastic magnets, which are magnetized radially from the center toward the outside periphery. Concretely speaking, the permanent magnets (6a) (6b) have S poles on their inner face sides and N poles on their outer face sides while, on the contrary to the permanent magnets (6a), (6b), the permanent magnets (19a - 19d) have N poles on their inner face side and S poles on their outer face sides. Accordingly, the S poles of the permanent magnets (6a), (6b) face each side of vertical coil sides (11af), (11bf), (11cf) and (11df), and the N poles of the permanent magnets (6a), (6b) face the opposite vertical coil sides (11ab), (11bb), (11cd) and (11db), so that magnetic fluxes different in polarity are supplied. For example, as to the coil (11b), the magnetic flux running from the interior to the exterior is supplied to the vertical coil side (11bf) and the magnetic flux running from the exterior to the interior is supplied to the vertical coil side (11bb). An outside peripheral yoke (8b) is provided along the outside periphery of the disc-like yoke (8) in such a way as to form a ring-like shape, and each permanent magnet are secured tightly on the inner face of the outside peripheral yoke (8b).

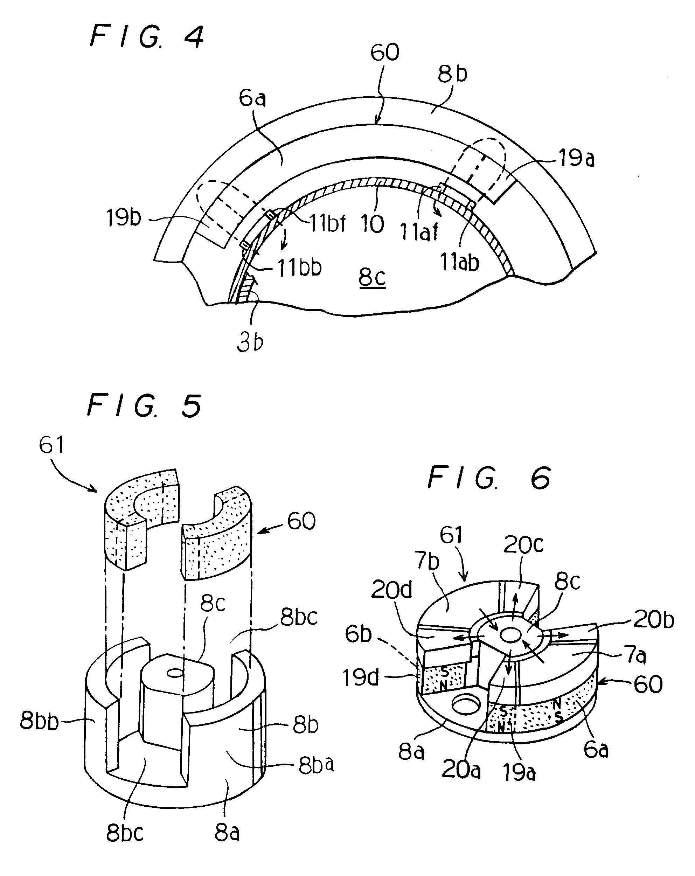

In the constraction described above, by flowing the prescribed electric current on the track controlling coils (11a), (11b), (11c) and (11d) which are arranged in a magnetic path formed by the outside peripheral yoke (8b) and a central yoke (8c), the lens holder (3) can be rotated in each direction shown by an arrow mark B. Fig. 4 is a plan view showing the directions of magnetic fluxes. Since the vertical coil sides (11af), (11bf) are different in the flowing direction of electric current from the vertical coil sides (11ab), (11bb) and the directions of magnetic fluxes interlinking with each flowing direction of electric currents are also different, torques act on each coil side in the same direction to improve the utilization efficiency of the vertical coil sides. In other words, vectors of magnetic fluxes interlinking with each of vertical coil sides (11ab), (11bb) are different each other by an angle of $180^\circ$, which, however, are not limited to $180^\circ$ and, of course, are permitted to exceed an angle of $90^\circ$.

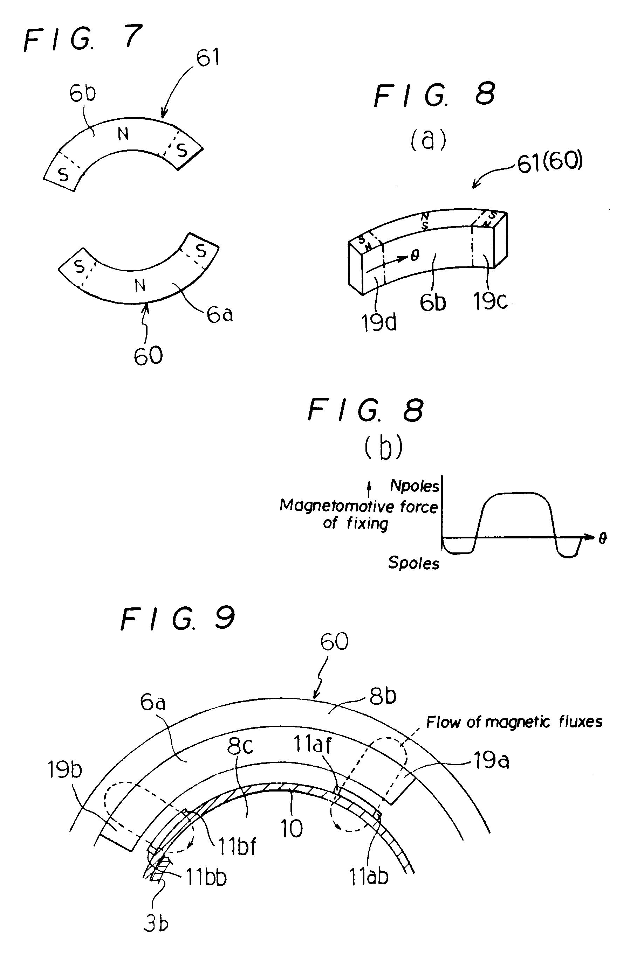

According to the embodiment, as the outside peripheral yoke (8b) is provided, each of permanent magnets can be positioned by means of fitting them tightly with the inner face of the outside peripheral yoke (8b), so that the spaces between each permanent magnet and each coil can be held accurately. As shown in Fig. 5, the outside peripheral yoke (8b) has a notch (8bc) which can divide the outside peripheral yoke (8b) into a yoke piece (8ba) and a yoke piece (8bb). As to the permanent magnets, further miniaturization can be accomplished by means of utilizing the magnets using rare earth elements and the like instead of the plastic magnets. Similar effect can be obtained even by the construction of the permanent magnets in the direction of thickness which are arranged in the polarity different each another as shown in Fig. 6 and Fig. 7. Namely, the permanent magnets (6a), (6b) may be arranged, with the upper faces being N poles and the lower faces being S poles, while the permanent magnets (19a - 19d) may be arranged, with the upper faces being S poles and the lower faces being N poles. In this case, magnetic circuit yokes (7a), (7b), (20a), (20b), (20c) and (20d), which make the magnetic fluxes, coming from the permanent magnets (6a), (6b), (19a), (19b), (19c) and (19d), circle round in radial direction, can be fixed on the upper faces of each permanent magnet, but these yokes are required to be devided mutually for each magnet.

According to the present invention, as described above, the magnet sections (60), (61) are constructed with a plurality of magnetic poles different in polarity such that the magnet fluxes different in polarity each another, i.e. the magnetic fluxes interlinking with each of vertical coil sides so as to exceed an angle of $90^\circ$ in the directions of vectors, are supplied to both vertical coil sides of the track controlling coils, whereby the utilization efficiency of the track controlling coils is improved, and the magnet sections (60), (61) have the cylindrical central yoke (8c) on their center and are provided on the outside periphery with the disc-like yoke (8a) having the outside peripheral yoke (8b) extending in such a way as to surround said central yoke (8c), while both the main permanent magnets consisting of the permanent magnets (6a), (6b) and the sub-permanent magnets consisting of permanent magnets (19a - 19d) are positioned so as to make contact with the inner face of said outside peripheral yoke (8b). Accordingly, if the outside peripheral yoke (8b) is kept highly accurately, it will result in accurate and easy positionings of each permanent magnet, whereby a highly precision driving equipment will be obtainable.

Fig. 8 to Fig. 11 show an embodiment wherein each set of the above-mentioned main permanent magnets and the above-mentioned sub-permanent magnets are constructed in one piece each of a pair of permanent magnets by means of fixing each set of said permanent magnets to a pair of magnetized materials in the shape of circular arc body.

In Fig. 8(a), the magnet sections (60), (61), which are provided on the side of yoke (8a), are constructed by means of hybrid magnetization into triple poles of magnetic materials in circular arc shape at a prescribed length, whereby permanent magnets (6a), (19a) and (19b) and permanent magnets (6b), (19c) and (19d), all of them having the functions same as those permanent magnets that were described with reference to Fig. 1 to Fig. 3, can be formed. Fig. 8(b) is a diagramatic view showing the magnetomotive force in the direction of width of the magnet section (60). Even in such a construction that was described above, by flowing the prescribed electric current on the track controlling coils, the lens holder (3) can be rotated in each direction shown by an arrow mark B. Fig. 9 is a plan view showing the directions of magnetic fluxes circling round through the permanent magnets (6a), (6b) in use for controlling both track and focus under hybrid magnetization into triple poles (as shown in Fig. 8) and the yokes (8b), (8c) of magnetic circuit. Since the vertical coil sides (11af), (11bf) are different in the flowing direction of electric current from the vertical coil sides (11ab), (11bb) and the directions of magnetic fluxes interlinking with each flowing direction of electric currents are also different, torques act on each coil side in the same direction to improve the utilization efficiency of the vertical coil sides.

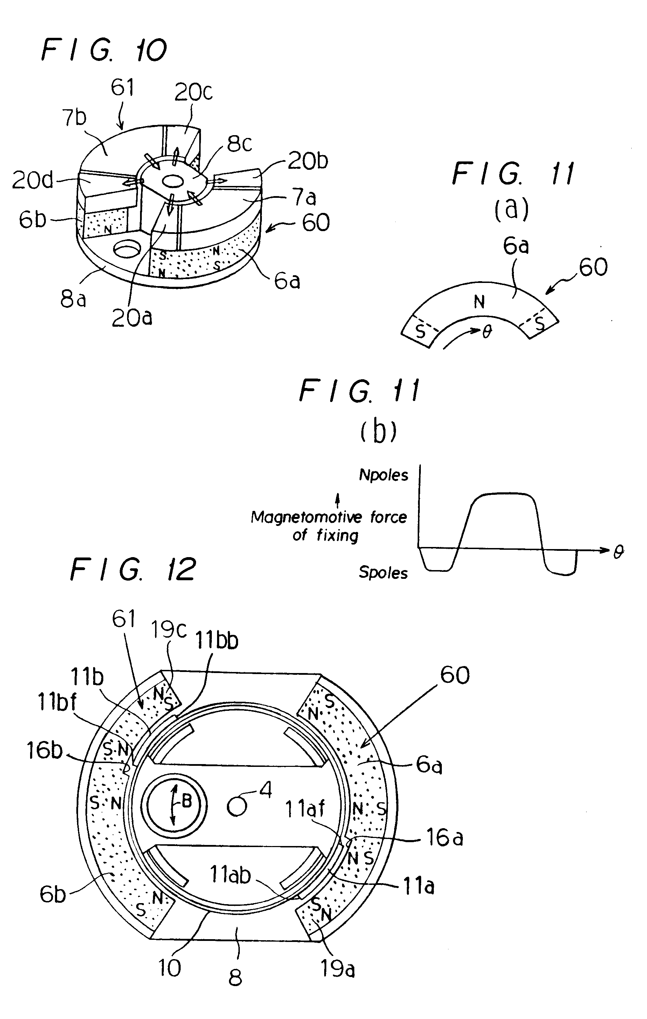

Even in case the magnet sections are constructed by using the permanent magnets under multipolar magnetization in the direction of height as shown in Fig. 10 and Fig. 11, permanent magnets, having the function same as those permanent magnets that were shown in Fig. 6 and Fig. 7, can be formed. Fig. 11(b) is a diagramatic view showing the magnetomotive force in the direction of height of the magnet section (60). In this case, the magnetic circuit yokes (7a), (7b), (20a), (20b), (20c) and (20d), which are fixed on the upper faces of each permanent magnet in such a way as to cover thereon in order to make the magnetic fluxes, coming from the magnets (6a), (6b) in use for controlling both track and focus, circle round in radial direction, are required to be divided for each magnetic pole of the permanent magnets under multipolar magnetization.

Fig. 12 to Fig. 15 show another embodiment of the driving equipment for objective lens, wherein the inner faces of the main permanent magnet ends and sub-permanent magnets are notched into recesses to form spaces capable of accommodating the track controlling coils. Namely, the lens holder (3) is provided with the focus controlling coil (10) and two track controlling coils (11a), (11b), which are positioned respectively on a diagonal line and are facing each other, and the magnet sections (60), (61) are arranged in such a way that they consist of the permanent magnets (6a), (6b) and (19a), (19b), (19c) and are constructed in one piece by magnetizing one magnetic material at center and both ends. In this case, the permanent magnets (6a), (6b), and (19a), (19c) are fixed in a radial direction under one-piece construction of circular arc magnetic material, and the permanent magnets (6a), (6b) are magnetized into N poles on their inner face sides and into S poles on their outer face sides, and also the permanent magnets (19a), (19c) facing the vertical coil faces (11ab), (11bb) are magnetized into S poles on their inner face sides and into N poles on their outer face sides, whereby magnetic fluxes different in polarity each other are supplied to the vertical coil sides (11af), (11ab) and the vertical coil sides (11bf), (11bb). And further, the inner faces of the ends of the permanent magnets (6a), (6b) facing the track controlling coils (11a), (11b) and the inner faces of the permanent magnets (19a), (19c) are arranged thinner than the inner faces of other portions so as to form recesses (16a), (16b) for accommodating the track controlling coils.

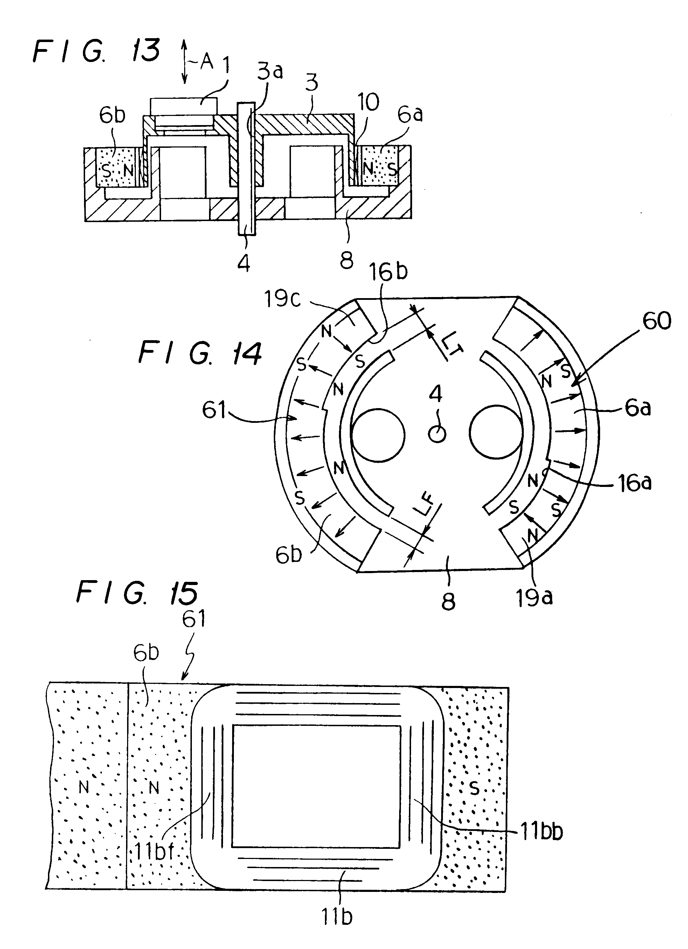

Describing further in detail, as shown in Fig. 14, the circular arc magnetic materials constructing the magnet sections (60), (61) become thin, and the clearances between the magnet sections (60), (61) and the inside peripheral yokes (8c), (8c) become broad as LT at the portion where the track controlling coils (11a), (11b) are provided, and become narrow as LF at other portions. The relation between LT and LF is represented by the formula; $LT \backsimeq LF + t$, where t is a thickness of the track controlling coils (11a), (11b).

In consequence, according to this embodiment, the magnetic fluxes different in polarity each other can be supplied to both sides of the vertical coils (11ab), (11af) and (11bb), (11bf) which are in parallel to the shaft (4) of each track controlling coil (11), resulting in making it possible to effectively use both vertical coil sides of two coils (11a), (11b) each as the track controlling force generating means.

Fig. 15 shows an example of such a track controlling coil (11b) that described above, wherein N pole of the permanent magnet (6b) faces the above-mentioned vertical coil side (11bf) which is in parallel to the shaft (4), while S pole of the permanent magnet (6b) faces another vertical coil side (11bb).

Accordingly, both vertical sides (11bf) and (11bb) generate effectively the track controlling force in the same direction. And further, according to this embodiment, as the clearance LF is narrow, the number of magnetic fluxes which are supplied by the main permanent magnets (6a), (6b) can be increased not only on the track controlling coils but also on the focus controlling coil (10), whereby the focus control can be achieved by a larger force.

Namely, in general, each of track controlling coils (11a), (11b) mentioned above are held in such a way that their loop faces are protruding outwardly in the state of being tightly fixed on the outside periphery of the focus controlling coil (10). Therefore, in the case of the conventional construction of forming prescribed gaps between the inner faces of the permanent magnets (6a), (6b) and the coils (11a), (11b), by the existence of the track controlling coils (11a), (11b) extruding outwardly as mentioned above, the gaps between the focus controlling coil (10) and the permanent magnets (6a), (6b) become unnecessarily larger, resulting in extreme difficulty in obtaining the focus controlling force.

According to this embodiment, however, as is clearly understood from Fig. 14, the recesses (16a), (16b) are formed in the portions where the main permanent magnets (6a), (6b) face the above-mentioned track controlling coil (11a), (11b), and in consequence, concerning the both coils, i.e. the track controlling coils (11a), (11b) and the focus controlling coil (10), the permanent magnets (6a), (6b), which are arranged along the outside peripheries of these coils, are able to become the arrangement for facing both coils (11), (10) with the magnetic pole faces being at the most effective small gaps.

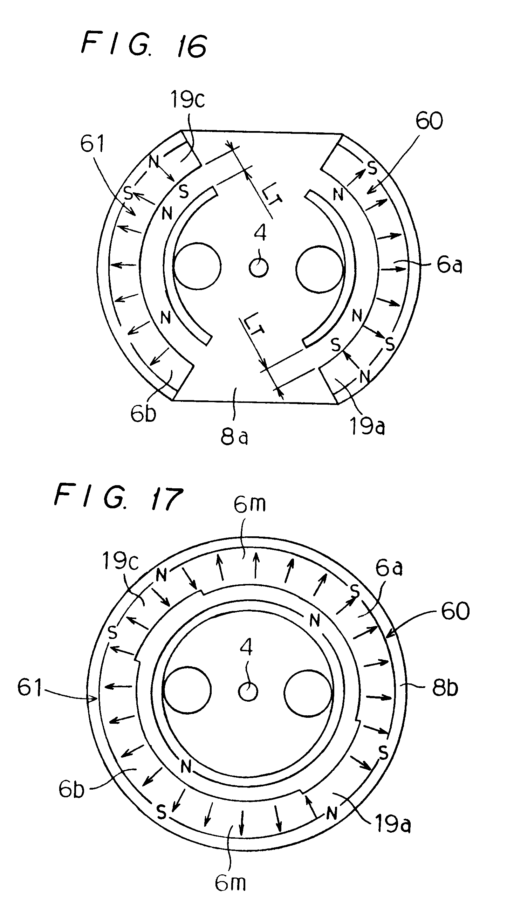

In the above embodiment, the permanent magnets (6a), (6b) are provided with the recesses (16a), (16b). However, such recesses are not required, if a sufficient driving force is obtainable in performing the track control even by the use of the permanent magnets without the recesses (16a), (16b) shown in Fig. 16. And also, as shown in Fig. 17, the portion between permanent magnet (6a) and permanent magnet (19c) and the portion between permanent magnet (6b) and permanent magnet (19a) can be connected by permanent magnets (6m), (6m) respectively to construct in a one-piece ring body, which can be secured on the inner face of the ring-like outside periphery yoke (8b). In this case, the utilization efficiency is improved, and moreover the positioning of permanent magnets becomes easy.

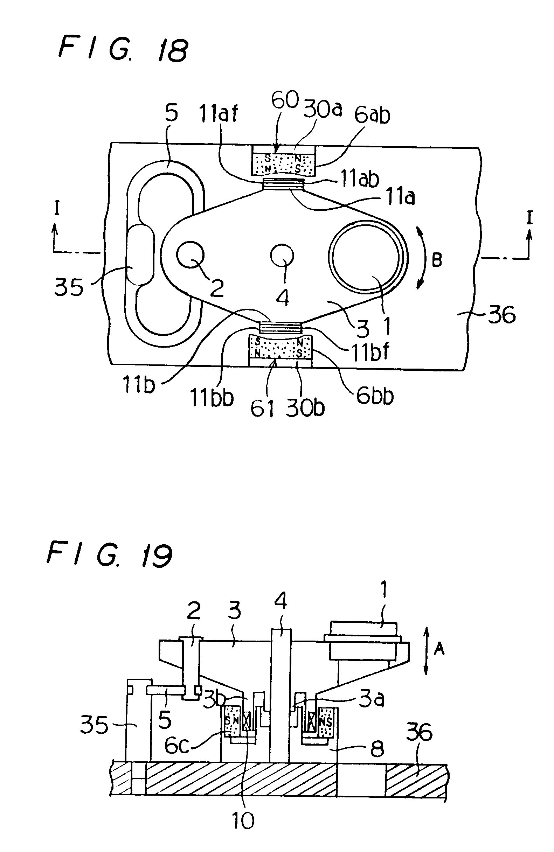

Fig. 18 to Fig. 28 show other embodiments of driving equipment for objective lens according to the present invention, which is a separate arrangement of the combination of a focus controlling coil (10) and a permanent magnet supplying this coil with a magnetic flux and the combination of a track controlling coil (11) and a permanent magnet supplying this coil with a magnetic flux. In Fig. 18 to Fig. 20, a lens holder (3), on which an objective lens (1) and a counter weight (2) are mounted, is rotatively pivoted through a bearing (3a) on a supporting shaft (4) installed on a base (36) in such a way that the lens holder is floating at a constant distance from the base (36). The lens holder (3) is mounted to a supporting rubber fixing pin (35) through a ring-like supporting rubber (5) fixed on the lower end of the counter weight (2), and the supporting rubber fixing pin (35) is held on the base (36).

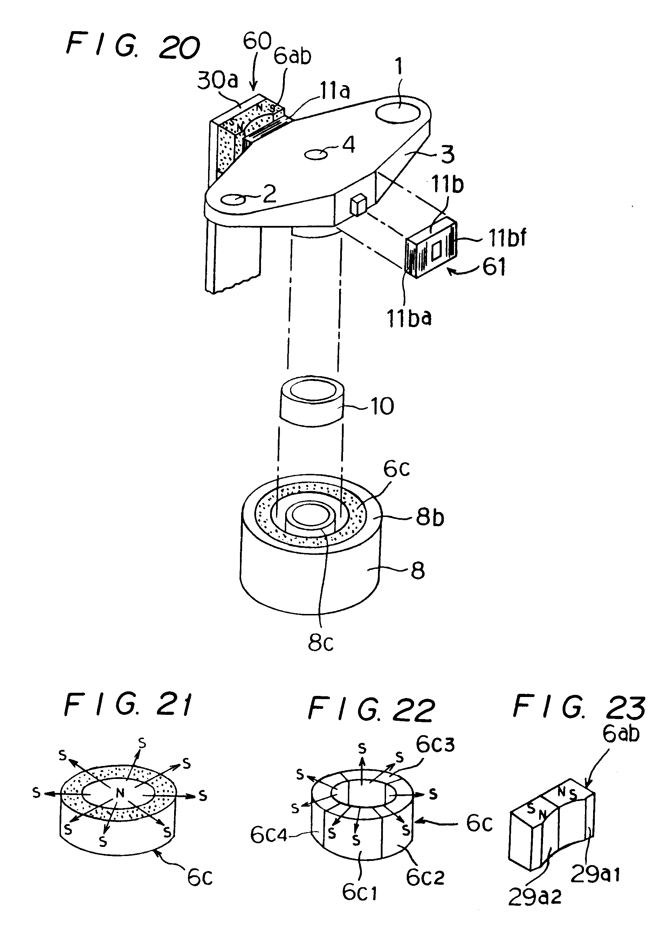

On the lower part of the lens holder (3), a coil supporting tube (3b) concentric with the tubular bearing (3a) is installed, and the focus controlling coil (10) is wound in cylindrical shape on the tube (3b). On the flat sides of the right and left of the lens holder (3), track controlling coils (11a), (11b) wound in rectangular shape, are installed as shown in Fig. 20. The focus controlling coil (10) is arranged in the magnetic path which is formed by a ring-like focus controlling permanent magnet (6c) installed along the outside periphery of the coil (10) and a ring-like focus controlling yoke (8) holding the magnet (6). The track controlling coils (11a), (11b) are arranged in the magnetic path which is formed by track controlling permanent magnets (6ab), (6bb) and track controlling yokes (30a), (30b). The yokes (30a), (30b) are mounted on the base (36) in such a way as to extend upward. The focus controlling permanent magnet (6c) and track controlling permanent magnets (6ab), (6bb) consist, for example, of plastic magnets. The focus controlling permanent magnet (6c) is magnetized radially from the center toward the outside periphery, while the track controlling permanent magnets (6ab), (6bb) are constructed in the polarity different between the right and the left under bipolar magnetization.

Thus, the construction is made by the separate arrangement for the combination of the focus controlling coil (10) and the permanent magnet (6c) and the combination of the track controlling coils (11a), (11b) and the permanent magnets (6af), (6bb). In this embodiment, too, both ends of permanent magnets (6ab), (6bb) are magnetized in the polarity different each other, so that the permanent magnets (6ab), (6bb) may supply the vertical coil sides (11ab), (11bb) and the vertical coil sides (11bb), (11bf) of the track controlling coils (11a), (11b) with the magnetic fluxes different in polarity.

Next, explanation is made on the operation.

By flowing a prescribed electric current on the focus controlling coil (10), the lens holder (3) slides in the direction shown by an arrow mark A to adjust a focal length. By flowing a prescribed electric current on the track controlling coils (11a), (11b), the lens holder (3) rotates in each direction shown by an arrow mark B to perform the track control. In this case, as both ends of the permanent magnets (6ab), (6bb) are magnetized in the polarity different each other, the vertical coil sides (11ab), (11af) of the coil (11a) corresponding to the both ends and the vertical coil sides (11bb), (11bf) of the coil (11b) corresponding to the both ends are supplied with the magnetic fluxes different in polarity each other, whereby an electromagnetic force acts on both vertical coil sides to increase the utilization efficiency of the coils.

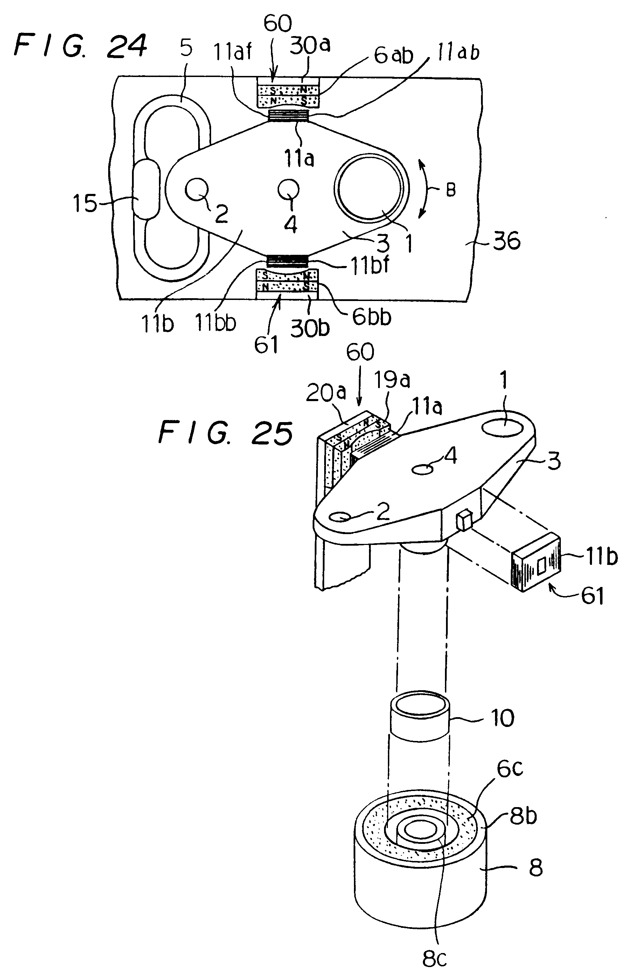

As to the permanent magnets, further miniaturization can be accomplished by means of utilizing the magnets using rare earth elements and the like. In the above embodiment, the permanent magnets (6c), (6ab) and (6bb) are of one-piece construction. However, similar effect can be obtained by the construction of the permanent magnets (6c), (6ab) and (6bb) by means of fixing together several number of circular arc magnet pieces (6c1) - (6c4) and (29a1), (29a2). In this case, by means of increasing the number of circular arc magnet pieces to be fixed together, the magnetization may be made in the direction of thickness, that is to say, the magnetization in a radial direction is not necessarily required. And also, in the above-mentioned embodiment, the lens holder is provided with the focus controlling coil and the track controlling coils, while the fixed sides are provided with the magnet sections facing each coil. On the contrary, however, the lens holder may be provided with the magnet sections, while the yoke sides may be provided with the coils. And further, as shown in Fig. 24 and Fig. 25, the permanent magnets (6ab), (6bb) can be constructed with a two permanent magnets which are magnetized in the polarities different at both ends.

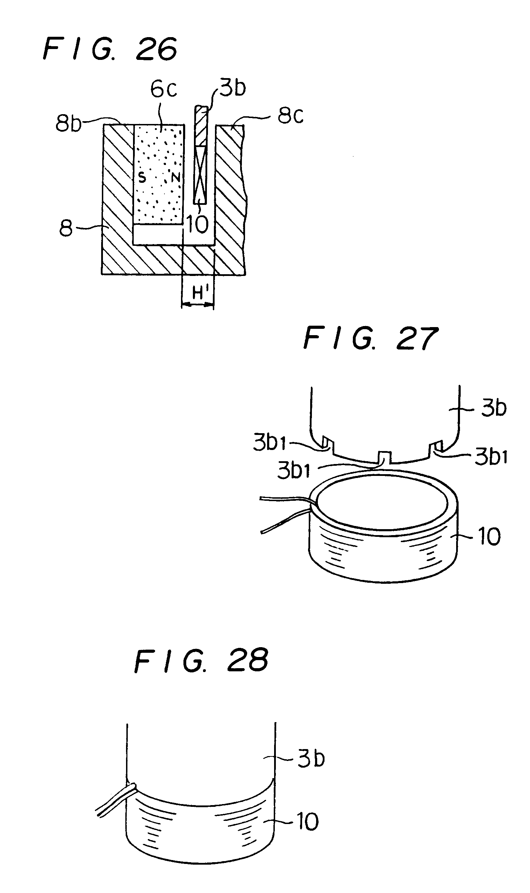

As shown in Fig. 26 to Fig. 28, a coil supporting tube (3b) can be provided with a plurality of notches (3b1) on its lower face to accommodate adhesive agents in such a way that the coil (10), which is wound in a ring shape, can be bonded with the adhesive agents to the lower ends of the tube (3b). And also, in case the tube (3b) is constructed with a plastic material, the tube (3b) can be provided with the focus controlling coil (10) under one-piece formation.

According to the embodiment shown in Fig. 26 to Fig. 28, the focus controlling coil (10) is the only factor that determines a gap H' between magnetic circuits, so that the gap between the magnetic circuits can be made small to the limiting value.

As described above, according to the embodiments shown in Fig. 18 to Fig. 28, magnetic circuits facing the focus controlling coil can be arranged along the whole circumference of said focus controlling coil, and therefore the utilization efficiency can be heightened.

And also, the focus controlling coil and the track controlling coils are respectively provided with the magnetic circuits for the exclusive use by each coil, making it possible to reduce the gap between the permanent magnet in the focus controlling magnetic circuit and the yoke and to achieve the object of improving the magnetic flux density. In consequence, the permanent magnet in the focus controlling magnetic circuit is remarkably miniaturized, whereby the reduction in production cost can be accomplished. Because of a ring-like shape, the permanent magnet for controlling focus can be manufactured easily.

And further, the track controlling magnetic circuit, which is arranged separately, is utilized to drive the two sides of the track controlling coil, so that the improvement in driving efficiency is accomplished, and moreover the volume of permanent magnets can be greatly reduced on the whole. And also, because of the simple configuration in the construction of track controlling coils, the coil winding work and the like can be performed under the simple condition and construction.

## Claims

1. A driving equipment for an objective lens (1) provided with a lens holder (3) being engaged to a supporting shaft (4) rotatably and movingly in the axial direction of said supporting shaft (4) and supporting the lens (1) having an optical axis parallel with the axial direction of said supporting shaft (4) and a driving unit rotating said lens holder (3) and sliding said lens holder (3) in the axial direction of said supporting shaft (4), said driving equipment being constructed so as to control out of track and out of focus of light spots condensed on a disc through said lens (1), said driving unit comprising first (10) and second (11) coils mounted to a coil holder (3b), and one or more magnetic circuits being provided on a fixed part, one or more of said magnetic circuits being made up of yokes (7,8) and one multi-magnetized magnet (6c,60,61), which is mounted in such a way that it is opposite to said first (10) and said second coils (11) and magnetized in a radial direction in such a way that two directions of vectors of magnetic fluxes, interlinking with one of the sides of second coils (11) being parallel with the axis of said supporting shaft (4) and another side of said second coils (11), are approximately opposite each other, characterized in that the magnets (6c,60,61) for use in said magnetic circuit are formed into ring shape or of circular arc body and in that said magnets (60,61) have at least one recess (16a,16b) on the part opposite to said second coils (11) in the direction parallel with the axis of said supporting shaft (4).

2. The driving equipment according to claim 1, characterized in that said first coils (10) are for controlling out of focus, are formed into ring shape and are mounted to a ring shaped coil mounting part on one part of said holder (3), said second coils (11) are for controlling out of track, are formed into rectangular shape and are mounted on said first coils (10) in such a way that two opposite sides of said second coils (11) are approximately parallel with the axis of said supporting shaft (4) and one or more magnetic circuits are provided in such a way that closed magnetic paths are formed.

3. The driving equipment according to claim 1, characterized in that said first coils (10) are for controlling out of focus, are formed into ring shape and are mounted to a first ring shaped coil mounting part on one part of said lens holder (3), first magnetic circuits are provided so as to oppose to said first coils (10) and to form closed magnetic paths, said second coils (11) are for controlling out of track, are formed into rectangular shape and are mounted to a second coil mounting part on the side of said lens holder (3) in such a way that two opposite sides of said second coils (11) are approximately parallel with the axis of said supporting shaft (4) and second magnetic circuits are provided so as to oppose to said second coils (11) in such a way that the directions of vectors of magnetic fluxes, interlinking with one of the sides of said second coils (11) parallel with the axis of said support shaft (4) and another side of said second coils (11), are approximately opposite each other.

4. The driving equipment according to claim 2 or 3, characterized in that the yokes (7,8) mounted on said magnets (60,61) opposite to said second coils (11) are separated at the boundary at which the directions of said magnetic vectors are different each other.

5. The driving equipment according to any preceding claim, characterized in that said magnets (6c,60,61) are made of plastic.

6. The driving equipment according to claim 3, characterized in that said first magnetic circuits are constructed in such a way that said magnets (6c) for use in said first magnetic circuits are formed into ring shape, magnetized in radial direction, arranged to all periphery of said first coils (10) so as to oppose to said first coils (10) and to be approximately concentric with said first coils (10) and fixed to the yokes (8b,8c) having two cylindrical parts concentric with each other in such a way that said supporting shaft (4) is centered, said second magnetic circuits are constructed in such a way that the second magnets (60,61) for use in said second magnetic circuits are opposite to said second coils (11) and magnetized in such a way that two directions of vectors of magnetic fluxes, interlinking with one side of said second coils (11) approximately parallel with said supporting shaft (4) and another side of said second coils (11) are approximately opposite, and plate-shaped yokes (20a,30a) are mounted to the side face which is not opposite to said second coils (11) of said second magnets (60,61).

7. The driving equipment according to claim 6, characterized in that said second coils (11) and said second magnetic circuits are arranged outwardly of said lens holder (3) and said fixed part centering around said supporting shaft (4).

8. The driving equipment according to claim 6 or 7, characterized in that said first coils (10) are provided on the lower part of said lens holder (3) and said first magnets (6c) are arranged in the outside peripheral direction of said first coils (10).

9. The driving equipment according to claim 6, 7 or 8, characterized in that one or more projecting parts for mounting said second coils (11) are provided at the side of said lens holder (3).

10. The driving equipment according to any one of claims 6 to 9, characterized in that said first magnets (6c) are made of plastic.

11. The driving equipment according to any one of claims 6 to 9, characterized in that said first magnets (6c) and said second magnets (60,61) are made of plastic.

12. The driving equipment according to any one of claim 3 and 6 to 11, characterized in that said first coils (10) and said lens holder (3) are joined at the only end part of said first coils (10) and part of the junction is notched.

13. The driving equipment according to claim 12, characterized in that said lens holder (3) and said first coils (10) are in one pieces.

**Revendications**

1. Equipement moteur pour une lentille objectif (1) pourvu d'un porte-lentille (3) monté sur un axe support (4) pour tourner et se déplacer dans la direction axiale de celui-ci et supportant la lentille (1), dont l'axe optique est parallèle à la direction axiale de l'axe support (4), et d'un dispositif moteur faisant tourner le porte-lentille (3) et le faisant coulisser dans la direction axiale de l'axe support (4), cet équipement moteur étant conçu de façon à corriger l'écart de la piste et le défaut de mise au point de taches lumineuses condensées sur un disque à travers la lentille (1), le dispositif moteur comprenant des premières bobines (10) et des deuxièmes bobines (11) montées sur un porte-bobines (3b), et un ou plusieurs circuits magnétiques étant prévus sur une partie fixe, un ou plusieurs de ces circuits magnétiques étant constitué(s) de culasses (7, 8) et d'un aimant multi-aimanté (6c, 60, 61) qui est monté de façon à être opposé aux premières bobines (10) et aux deuxièmes bobines (11) et aimanté dans une direction radiale de façon que deux directions de vecteurs de flux magnétiques, se rattachant à un des côtés des deuxièmes bobines (11) parallèles à l'axe de l'axe support (4) et un autre côté de ces deuxièmes bobines (11), soient approximativement opposées, caractérisé par le fait que les aimants (6c, 60, 61) utilisés dans le circuit magnétique sont de forme annulaire ou formés d'un corps en arc de cercle, et que les aimants (60, 61) ont au moins un évidement (16a, 16b) sur la partie opposée aux deuxièmes bobines (11) dans la direction parallèle à l'axe de l'axe support (4).

2. Equipement moteur selon la revendication 1, caractérisé par le fait que les premières bobines (10) sont destinées à la correction du défaut de mise au point, sont de forme annulaire et sont montées sur une partie de montage sur une partie du porte-lentille (3), les deuxièmes bobines (11) sont destinées à la correction de l'écart de la piste, sont de forme rectangulaire et sont montées sur les premières bobines (10) de façon que deux côtés opposés des deuxièmes bobines (11) soient approximativement parallèles à l'axe de l'axe de support (4), et un ou plusieurs circuits magnétiques sont prévus de façon que soient formés des chemins magnétiques fermés.

3. Equipement moteur selon la revendication 1, caractérisé par le fait que les premières bobines (10) sont destinées à la correction du défaut de mise au point, sont de forme annulaire et sont montées sur une première partie de montage sur une partie du porte-lentille (3), des premiers circuits magnétiques sont prévus de façon à être opposés aux premières bobines (10 et former des chemins magnétiques fermés, les deuxièmes bobines (11) sont destinées à la correction de l'écart de la piste, sont de forme rectangulaire et sont montées sur une deuxième partie de montage sur le côté du porte-lentille (3) de façon que deux côtés opposés des deuxièmes bobines (11) soient approximativement parallèles à l'axe de l'axe support (4), et des deuxièmes circuits magnétiques sont prévus de façon à être opposés aux deuxièmes bobines (11) de façon que les directions de vecteurs de flux magnétiques, se rattachant à un des côtés des deuxièmes bobines (11) parallèles à l'axe de l'axe support (4) et un autre côté de ces deuxièmes bobines (10), soient approximativement opposées.

4. Equipement moteur selon l'une des revendications 2 et 3, caractérisé par le fait que les culasses (7, 8) montées sur les aimants (60, 61) opposés aux deuxièmes bobines (11) sont séparées à la limite où les directions des vecteurs magnétiques sont différentes.

5. Equipement moteur selon l'une des revendications précédentes, caractérisé par le fait que les aimants (6c, 60, 61) sont en matière plastique.

6. Equipement moteur selon la revendication 3, caractérisé par le fait que les premiers circuits magnétiques sont conçus de façon que les aimants (6c) qui y sont utilisés soient de forme annulaire, aimantés en direction radiale, disposés sur toute la périphérie des premières bobines (10) de façon à être opposés à celles-ci et approximativement concentriques avec celles-ci, et fixés aux culasses (8b, 8c), qui ont deux parties cylindriques concentriques de façon que l'axe support (4) soit centré, les deuxièmes circuits magnétiques sont conçus de façon que les deuxièmes aimants (60, 61) qui y sont utilisés soient opposés aux deuxièmes bobines (11) et aimantés de façon que deux directions de vecteurs de flux magnétiques, se rattachant à un côté des deuxièmes bobines (11) approximativement parallèle à l'axe support (4) et un autre côté de ces deuxièmes bobines (11), soient approximativement opposées, et des culasses en forme de plaque (20a, 30a) sont montées sur la face latérale qui n'est pas opposée aux deuxièmes bobines (11) des deuxièmes aimants (60, 61).

7. Equipement moteur selon la revendication 6, caractérisé par le fait que les deuxièmes bobines (11) et les deuxièmes circuits magnétiques sont placés à l'extérieur du porte-lentille (3) et de la partie fixe entourant pour le centrer l'axe support (4).

8. Equipement moteur selon l'une des revendications 6 et 7, caractérisé par le fait que les premières bobines (10) sont prévues sur la partie inférieure du porte-lentille (3) et les premiers aimants (6c) sont disposés dans la direction périphérique extérieure des premières bobines (10).

9. Equipement moteur selon l'une des revendications 6, 7 et 8, caractérisé par le fait qu'une ou plusieurs parties saillantes pour le montage des deuxièmes bobines (11) sont prévues sur le côté du porte-lentille (3).

10. Equipement moteur selon l'une des revendications 6 à 9, caractérisé par le fait que les premiers aimants (6c) sont en matière plastique.

11. Equipement moteur selon l'une des revendications 6 à 9, caractérisé par le fait que les premiers aimants (6c) et les deuxièmes aimants (60, 61) sont en matière plastique.

12. Equipement moteur selon l'une des revendications 3 et 6 à 11, caractérisé par le fait que les premieres bobines (10) et le porte-lentille (3) sont joints à la seule partie extrême des premières bobines (10) et une partie de la jonction est encochée.

13. Equipement moteur selon la revendication 12, caractérisé par le fait que le porte-lentille (3) et les premières bobines (10) sont d'une seule pièce.

**Patentansprüche**

1. Antriebsvorrichtung für eine Objektivlinse (1) mit einem Linsenhalter (3), der an einer Haltewelle (4) drehbar und in axialer Richtung der Haltewelle (4) beweglich angebracht ist und die Linse (1) trägt, welche eine optische Achse parallel zu der Axialrichtung der Haltewelle (4) aufweist, und einer Antriebseinheit, die den Linsenhalter (3) dreht und den Linsenhalter (3) in der Axialrichtung der Haltewelle (4) verschiebt, wobei die Antriebsvorrichtung derart aufgebaut ist, daß sie einen Spurfehler und einen Fokussierfehler von Lichtpunkten überwacht, die auf einer Scheibe durch die Linse (1) abgebildet werden, wobei die Antriebseinheit erste (10) und zweite (11) Spulen, die auf einem Spulenhalter (3b) montiert sind, sowie einen oder mehrere magnetische Kreis(e) umfaßt, die auf einem festen Teil vorgesehen sind, wobei einer oder mehrere der magnetischen Kreise aus Jochen (7, 8) und einem mehrfach magnetisierten Magneten (6c, 60, 61) bestehen, der derart angebracht ist, daß er den ersten (10) und den zweiten (11) Spulen gegenüberliegt und in einer Radialrichtung derart magnetisiert ist, daß zwei Richtungen von Vektoren magnetischer Flüsse, die mit einer derjenigen Seiten der zweiten Spulen (11), welche achsparallel mit der Haltewelle (4) liegen, und einer anderen Seite der zweiten Spulen (11) in Verbindung stehen, in etwa einander gegenüberliegen, dadurch gekennzeichnet, daß die Magneten (6c, 60, 61) für die Verwendung in dem magnetischen Kreis ringförmig oder kreisbogenförmig sind und daß die Magneten (60, 61) wenigstens einen Absatz (16a, 16b) auf dem den zweiten Spulen (11) gegenüberliegenden Teil aufweisen, und zwar in der Richtung parallel zu der Achse der Haltewelle (4).

2. Antriebsvorrichtung nach Anspruch 1, dadurch gekennzeichnet, daß die ersten Spulen (10) zum Überwachen eines Fokussierfehlers dienen, ringförmig ausgebildet und an einem ringförmigen Spulenanbringungsteil auf einem Teil des Halters (3) angebracht sind, daß die zweiten Spulen (11) zum Überwachen eines Spurfehlers dienen, rechteckförmig ausgebildet und auf den ersten Spulen (10) derart angebracht sind, daß zwei einander gegenüberliegende Seiten der zweiten Spulen (11) ungefähr parallel mit der Achse der Haltewelle (4) liegen und einer oder mehrere magnetische Kreise derart ausgebildet sind, daß geschlossene magnetische Pfade entstehen.

3. Antriebsvorrichtung nach Anspruch 1, dadurch gekennzeichnet, daß die ersten Spulen (10) zum Überwachen eines Fokussierfehlers dienen, ringförmig ausgebildet und an einem ersten ringförmigen Spulenanbringungsteil auf einem Teil des Linsenhalters (3) angebracht sind, daß erste magnetische Kreise derart vorgesehen sind, daß sie den ersten Spulen (10) gegenüberliegen und geschlossene magnetische Pfade bilden, daß die zweiten Spulen (11) zum Überwachen eines Spurfehlers dienen, rechteckförmig ausgeführt und an einem zweiten Spulenanbringungsteil auf der Seite des Linsenhalters (3) derart angebracht sind, daß zwei einander gegenüberliegende Seiten der zweiten Spulen (11) ungefähr parallel der Achse der Haltewelle (4) liegen und zweite magnetische Kreise den zweiten Spulen derart gegenüberliegend ausgebildet sind, daß die Richtungen von Vektoren magnetischer Flüsse, die mit einer der parallel zu der Achse der Haltewelle (4) liegenden Seiten der zweiten Spulen (11) und einer anderen Seite der zweiten Spulen (11) in Verbindung stehen, in etwa einander entgegengesetzt sind.

4. Antriebsvorrichtung nach Anspruch 2 oder 3, dadurch gekennzeichnet, daß die Joche (7, 8), die auf den Magneten (60, 61) gegenüber den zweiten Spulen (11) angebracht sind, an demjenigen Rand getrennt sind, an dem die Richtungen der magnetischen Vektoren voneinander unterschiedlich sind,

5. Antriebsvorrichtung nach einem der vorangehenden Ansprüche, dadurch gekennzeichnet, daß die Magneten (6c, 60, 61) aus Kunststoff sind.

6. Antriebsvorrichtung nach Anspruch 3, dadurch gekennzeichnet, daß die ersten magnetischen Kreise derart aufgebaut sind, daß die Magneten (6c) für die Verwendung in den ersten magnetischen Kreisen ringförmig ausgebildet, in Radialrichtung magnetisiert, über den gesamten Umfang der ersten Spulen (10) derart angeordnet, daß sie den ersten Spulen (10) gegenüber und im wesentlichen konzentrisch mit den ersten Spulen (10) liegen, und an den Jochen (8b, 8c) befestigt sind, welche zwei zylindrische Teile derart konzentrisch zueinander aufweisen, daß die Haltewelle (4) zentriert ist, daß die zweiten magnetischen Kreise derart aufgebaut sind, daß die zweiten Magneten (60, 61) für die Verwendung in den zweiten magnetischen Kreisen gegenüber den zweiten Spulen (11) angeordnet und derart magnetisiert sind, daß zwei Richtungen von Vektoren magnetischer Flüsse, welche mit einer Seite der zweiten Spulen (11), in etwa parallel der Haltewelle (4) und einer anderen Seite der zweiten Spulen (11) in Verbindung stehen, in etwa entgegengesetzt sind, und daß plattenförmige Joche (20a, 30a) an derjenigen Seitenfläche der zweiten Magneten (60, 61) angebracht sind, die nicht den zweiten Spulen (11) gegenüberliegt.

7. Antriebsvorrichtung nach Anspruch 6, dadurch gekennzeichnet, daß die zweiten Spulen (11) und die zweiten magnetischen Kreise außerhalb des Linsenhalters (3) angeordnet sind und der feste Teil um die Haltewelle (4) herum zentriert.

8. Antriebsvorrichtung nach Anspruch 6 oder 7, dadurch gekennzeichnet, daß die ersten Spulen (10) auf dem unteren Teil des Linsenhalters (3) vorgesehen sind und die ersten Magnete (6c) in Außen-Umfangsrichtung der ersten Spulen (10) angeordnet sind.

9. Antriebsvorrichtung nach Anspruch 6, 7 oder 8, dadurch gekennzeichnet, daß einer oder mehrere Ansätze zum Anbringen der zweiten Spulen (11) auf der Seite des Linsenhalters (3) vorgesehen ist/sind.

10. Antriebsvorrichtung nach einem der Ansprüche 6 bis 9, dadurch gekennzeichnet, daß die ersten Magnete (6c) aus Kunststoff sind.

11. Antriebsvorrichtung nach einem der Ansprüche 6 bis 9, dadurch gekennzeichnet, daß die ersten Magnete (6c) und die zweiten Magnete (60, 61) aus Kunststoff sind.

12. Antriebsvorrichtung nach einem der Ansprüche 3 und 6 bis 11, dadurch gekennzeichnet, daß die ersten Spulen (10) und der Linsenhalter (3) an dem einzigen Endabschnitt der ersten Spulen (10) verbunden sind und ein Teil der Verbindung gekerbt ist.

13. Antriebsvorrichtung nach Anspruch 12, dadurch gekennzeichnet, daß der Linsenhalter (3) und die ersten Spulen (10) einstückig ausgeführt sind.

FIG. 1

FIG. 2

FIG. 3 (a)

FIG. 3 (b)

# FIG. 4

# FIG. 5

# FIG. 6

### FIG. 7

### FIG. 8
(a)

### FIG. 8
(b)

### FIG. 9

F I G. 10

F I G. 11
(a)

F I G. 11
(b)

Npoles

Magnetomotive force
of fixing

Spoles

θ

F I G. 12

FIG. 13

FIG. 14

FIG. 15

FIG. 16

FIG. 17

## F I G. 18

## F I G. 19

F I G. 20

F I G. 21

F I G. 22

F I G. 23

F I G. 24

F I G. 25

F I G. 26

F I G. 27

F I G. 28

*F I G. 29* Prior art

*F I G. 30* Prior art

*F I G. 31* Prior art